# EUROPEAN PATENT SPECIFICATION

(11) **EP 3 429 715 B1**
(45) Date of publication and mention of the grant of the patent: **23.12.2020**
(21) Application number: 17725344.0
(22) Date of filing: 31.03.2017
(51) Int. Cl.: B01D 1/00, B01D 5/00, C02F 1/04, C02F 1/14, C02F 103/00, C02F 103/08

(54) **SOLAR AND WIND ENERGY WATER PURIFIER**
SOLAR- UND WINDENERGIEWASSERREINIGER
PURIFICATEUR D'EAU À ÉNERGIE SOLAIRE ET ÉOLIENNE

(30) Priority: 04.04.2016 IT UA20162850
(43) Date of publication of application: 23.01.2019
(73) Proprietor: Oppo, Stefano, 09131 Cagliari (IT)
(72) Inventor: Oppo, Stefano, 09131 Cagliari (IT)
(74) Representative: Robba, Pierpaolo
(86) International application number: PCT/IB2017/051861
(87) International publication number: WO 2017/175104

(56) References cited:
- EP-A1- 1 475 136
- EP-A1- 2 778 139
- WO-A1-99/06322
- DE-U1- 20 301 711
- US-A- 2 332 294

## Description

### FIELD OF THE INVENTION

The present invention concerns the technical field of water purifiers.

### STATE OF THE ART

The aim of this project is to patent a new machine capable of producing pure drinking water by using a method that differs from the traditional ones. Generally, the production process uses chemical and bacteriological methods, using almost exclusively rainwater.

Document EP2778139A1 discloses a distillation apparatus for generating distilled water by use of solar heat including a heat transmissive window that transmits the solar heat within a housing. The apparatus comprises a horizontal member, closing the bottom part of the housing, and an intake opening, through which the housing is connected to a water storage area.

The present invention is innovative in that it can produce pure drinking water also and directly from seawater, eliminating the need to dispose of the resulting salt. Further aims, features and advantages of this invention will emerge more clearly from the detailed description below, given by way of example and without limitation, and illustrated in the attached figures, where:
Figure 1 shows a perspective view of a preferred embodiment of the present invention on a 1: 100 scale;
Figure 2 shows a first side view of a preferred embodiment of the present invention on a 1: 100 scale;
Figure 3 shows a front view of a preferred embodiment of the present invention on a 1: 100 scale;
Figure 4 shows a rear view of a preferred embodiment of the present invention on a 1: 100 scale;
Figure 5 shows a plan view section of a preferred embodiment of the present invention on a 1: 100 scale;

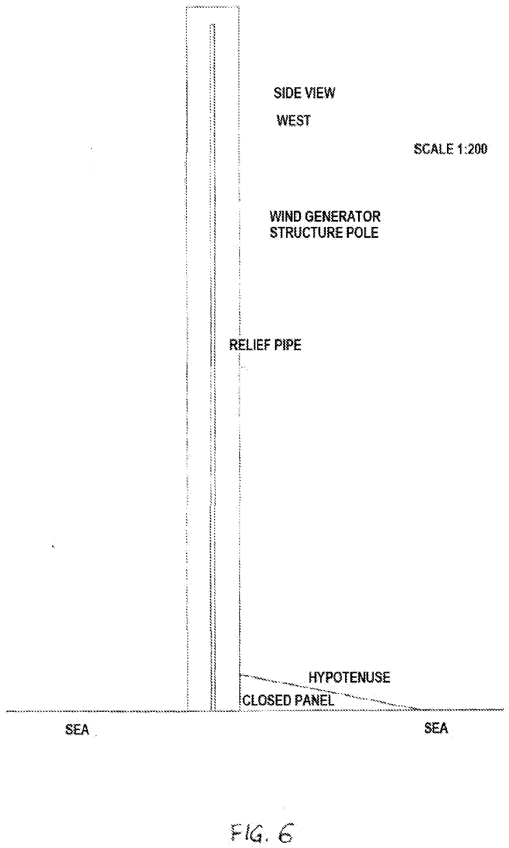

Figure 6 shows a second side view of a preferred embodiment of the present invention on a 1:200 scale;

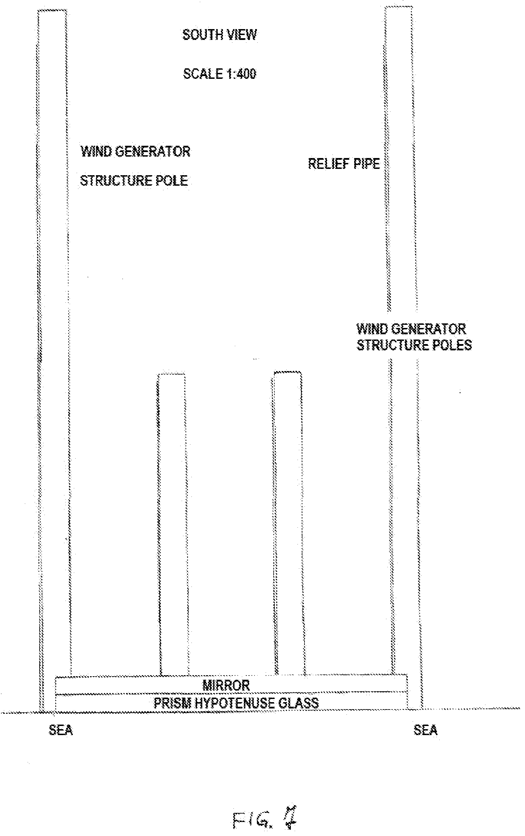

Figure 7 shows a front view of a preferred embodiment of the present invention on a 1:400 scale.

### BRIEF DESCRIPTION OF THE INVENTION

The present invention is designed to realise a water purification system.

Firstly, this invention relates to a water purification system according to claim 1. The present invention stems from the general consideration that the technical problem described above can be effectively and reliably solved by means of a water purification system comprising a three-dimensional structure consisting of a plurality of plates (plexiglass, glass, photovoltaic panels) interconnected so as to leave an open space which coincides with its lower portion, wherein said structure is apt to be placed on the surface of the water in a lake or sea, so that the water surface where said structure is placed contributes to the hermetic sealing of the structure itself. The present invention integrates the boiling and vaporisation principles for the intended purpose. Moreover, the invention uses both energy collected from amplified solar irradiation and energy collected from an additional external source.

The water purification system of the present invention further comprises:
- At least one source of heat, associated with said three-dimensional structure, apt to be placed, in use, under the surface of the water, wherein said source of heat is capable of heating the surrounding portion of water and of generating a corresponding amount of water vapour by bringing water to boiling point;
- At least one conduit - a pipe, for instance - preferably provided with at least one valve, wherein said conduit is capable of connecting said water vapour with a source of cold air in order to transform said water vapour into purified water;
- At least one tank to store the purified water produced;

This is achieved by joining several plates - glass, plexiglass, photovoltaic panels - as in the following exemplifying description, and supporting said artifact on the liquid surface in such a way as to hermetically seal the entire artifact, thus essentially forming a solar furnace.

The system comprises at least one element supporting the three dimensional structure. The supporting element is anchored to the bottom of the lake or sea, or is anchored to an adequate supporting surface placed at a given depth of the lake or sea.

The three-dimensional structure consists of a right-angled triangular prism, having a first rectangular face, which is the surface of the water on which the three-dimensional structure is apt to be placed, a second rectangular face, orthogonal to the first rectangular face, a third rectangular face that joins far-ends of the first rectangular face and second rectangular face. The three-dimensional structure further comprises two closed lateral faces in the shape of a right-angled triangle. The first rectangular surface has a width from 6 to 10 meters and a minimum length of 10 meters.

According to a preferred embodiment, said three-dimensional structure also comprises additional plates placed below the water surface, which represent a kind of continuation of the same structure underwater.

The source of heat is constituted by at least one electrical resistor, and is associated with suitable energy supply.

In this kind of realisation, immediately below the surface of the water in the lake or sea, there are electric resistors associated with suitable energy supply and capable of bringing the water rapidly to boiling point, the vapour of which is conveyed through a pipe to a source of cold air so as to be re-transformed into distilled water, in turn stored in an ad hoc tank for use and distribution.

This invention relates also to a method for purifying water according to claim 9.

### DETAILED DESCRIPTION OF THE INVENTION

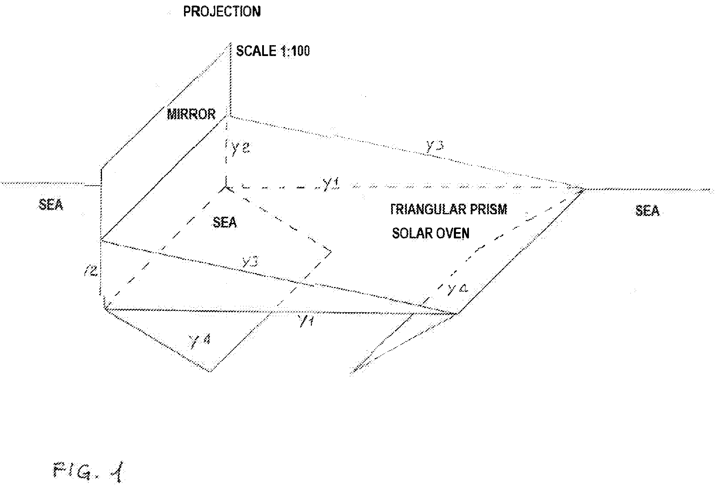

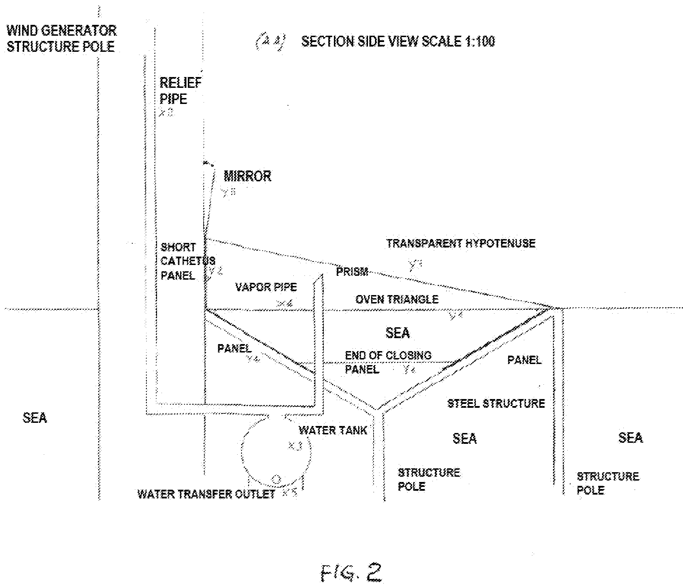

The artifact of the present invention is built on a planar area of a strip of water having a width from 6 to 10 meters and a minimum length of about 10 meters. Let us assume that it is constructed by assembling complete elements of a size between 6 and 10 meters x 10 meters and that, merely by way of example and without limitation, the water is a portion of seawater surface. A size of 10 meters x 3,000 meters can meet the water needs of a resident population of 10,000 people, producing up to one cubic meter of pure water per day every 2 square meters of sea surface. The load-bearing structure is made of steel and consists of H-beams and pillars. Fiberglass materials; glass/plexiglass; transparent photovoltaic panels: electrical, electronic and hydraulic components complete its realisation. The artifact considered consists of a right-angled triangular prism assembled on the water surface, in which a rectangular face - figure 1, yl - is the surface of the seawater; a second face - figure 1, y2 - also rectangular, is orthogonal to the first, and a third rectangular face - figure 1, y3 - joins the far-ends of the above-mentioned faces so as to form a right-angled prism; the two lateral faces are also closed, for the moment, in the shape of a right-angled triangle. Analysing figure 2 as a section, we will note that the polyhedron has the shape of a right-angled triangle where the catheti are 6/10 meters in length and 2 meters in height. The longest cathetus - figure 2, yl - coincides with/is the water surface while the shortest one - figure 2, y2 - is orthogonal to the surface of the sea and rises skywards to the north. The hypotenuse - figure 2, y3 - is directed towards the sun and joins the two catheti with a 20% gradient. This hypotenuse rests on a rigid structure formed by pillars and steel beams anchored to the seabed. The hypotenuse is strictly made of glass/plexiglass or latest-generation transparent photovoltaic panels. The irradiation of the sun on the above-mentioned transparent surface creates a greenhouse effect between the plate in question and the surface of the sea.

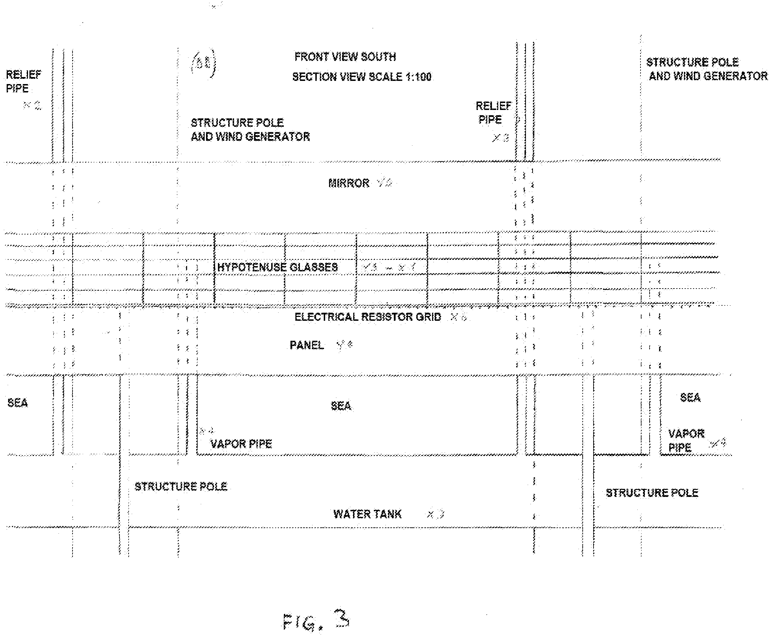

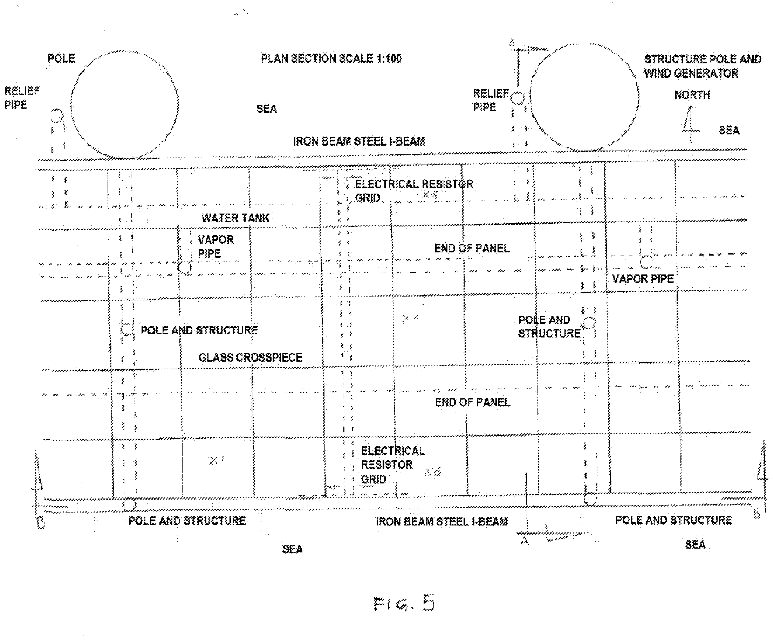

The shorter cathetus - rectangular plane - that is, the one that pointing upwards creates a side the length of 2 meters - figures 1 and 2, y2 - continues for about double its length under the water, forming a 30-degree angle with the latter - which could even drop to a 20-degree angle - reaching under the longer cathetus and it is made of the same material as the other cathetus - black fiberglass - figures 1 and 2, y4 - thus forming a rectangular plane under the sea - figure 1, y4. The same panel - rectangular plane - continues upwards rising above the cathetus by 2 meters above the sea surface - figure 2, y2 - by an equal measure but with different material and with a different orientation, thus reaching a total of 4 meters above the water surface. The top part, of a further length of 2 meters - figures 2 and 3, y5 - is a refractive mirror - figure 1: mirror - and can be adjusted by slightly rotating the base. This refractive mirror can reach a height of up to 4 meters depending on the length of the longer cathetus - identified above also with yl - and develops in length following the 20% inclined plane of the right-angled triangular prism in all its width (therefore, for the whole length of the structure - figures 1 and 3) shown in the section above the hypotenuse - figure 2, y3. The opposite end of the hypotenuse, the one that is in contact with the water to the south, is also supported by a rigid steel frame - H-beams - but closes the surface of the sea with a black fiberglass panel - figures 1, 2 and 4 , y4 - that goes underwater to a depth of about 4 meters, if the hypotenuse is about 10 meters long, and that is rotated, in its position orthogonal to the water - by 60/80 degrees towards the inside of the hypotenuse, thus forming another rectangular plane - figure 1, y4. A grid of longitudinal and transversal crosspieces which rest on both far-ends is realised on the inclined surface of the plane in section y3 - figures 1, 2, 3 and 5 - of the prism in question, in order to lay transparent materials. Said stainless steel crosspieces form squares - figure 5, x1 - by way of example 2 meters x 2 meters where the glass panes and/or panels are fitted. In the central part, the glass panes/plexiglass or panels may even be, for example, 2.00 meters x 6.00 meters.

The aim is to build a furnace capable of reaching a temperature of over 100 degrees centigrade, using the object in question with the aid of electric resistors - like those used for domestic water heaters - placed on the surface of the water. In the upper part of the north-facing hypotenuse, the supporting structure of the artifact consists of pillars anchored firmly to the seabed at a distance of about 10 meters - figure 5. These steel pillars point skywards thus making the laying of wind turbines possible, preferably last- generation ones, that is without blades, to produce energy for the water needs. A tank is fixed to the base of these poles - figures 2 and 3, x3 - to collect water. Said tank is tubular and runs the whole length of the structure. It has three pipes: the first one lets the air out from the top of the tank - figures 2 and 3, x2. This rises above the tank, immersed in the sea, up to the end of the pole supporting the wind turbine. The second pipe - figures 2 and 3, x4 - from the top of the tank goes into the body of the right-angled triangular prism volume serving as a vapour-evaporating furnace. This pipe conveys the vapour into the tank to turn it back into distilled water. The third pipe - figure2, x5 - is placed at both ends of the tank and draws the water produced in the lower part of the tank, ready to be transferred.

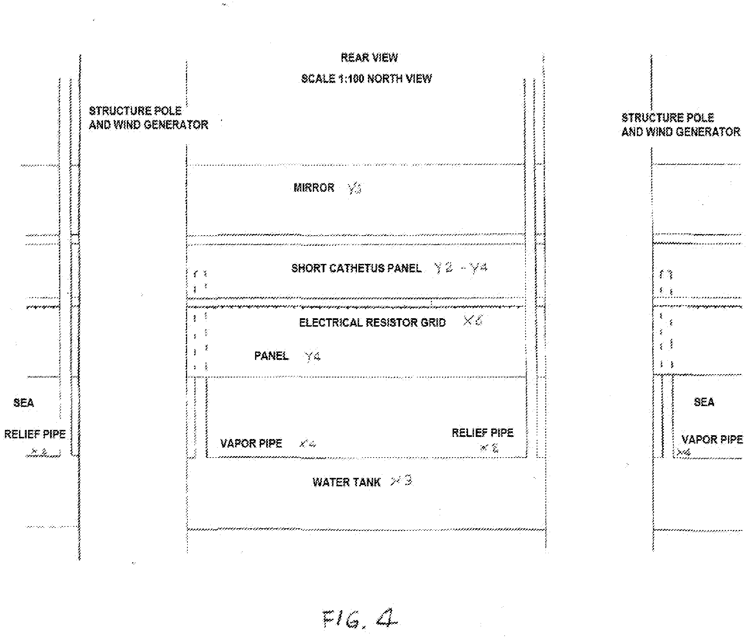

On the face of the prism in contact with the sea, which in section is the longer cathetus, about 10 meters long on the water surface in the project - figure 2, yl - a grid is placed, formed by resistors - figure 4, x6 - like those used for domestic water heaters - placed transversely, parallel to each other and joined at the two ends by two longitudinal rods which are joined to the rigid support structure so as to hold the water resistors on the surface of the water. Said resistors heat up to over 100 degrees centigrade, they are spaced apart at a distance of 0.25/0.30 meters and are painted black. Obviously, the two far-ends of the artifact - right-angled triangular prism - are closed by trapezoidal transparent panels - figure 2 y6 - and drop down orthogonally from said hypotenuse by about 2 meters below the surface of the water in order to contain the air pressure inside the right-angled triangular prism. The panels mentioned - figure 2, y6 - are trapezoid-shaped since the natural triangular shape to close the prism has been extended with a view to immersing a further part in the water. This volume between the hypotenuse and the surface of the water - right-angled triangular prism - serving as an assisted solar furnace, must be isolated and sealed in order to have the features of a large pressure cooker with pipes as the only outlet - figure 2, x4 - that from below the water surface connect the cylindrical tank to collect the water vapour - that becomes pure water inside said tank - and the aforementioned triangular prism formed on the water surface by the hypotenuse in question - inclined plane - and the catheti - water surface and orthogonal plane. The connecting pipes mentioned may be provided with one-way valves. The amount of energy to operate the structure at best is about 400 kW per 100 square meters.

The project in question is based on the principles of solar furnaces that have always been used to produce thermal energy mostly for the preparation of food. With the present invention, the aim is to combine wind energy or other sources of energy with the heat produced by the solar furnaces, so as to obtain the heat necessary to produce purified water capable of satisfying the needs of large communities. In fact, as in pots water starts boiling as soon as the surface temperature reaches 100 degrees centigrade, wherein a lower flame is necessary under the pot the nearer the surface of the water is to the same source of heat, likewise, if in an artifact the heat produced directly by the sun is combined with the heat produced by a source of heat immediately below the surface of the water, boiling temperature can easily be reached. In this project, said phenomenon is exploited by integrating the above energies directly in the sea. However, the project calls for a short timeline to produce large quantities of pure drinking water. For this reason, it is necessary to raise the water temperature of the first layer in the furnace - regarding minimum depths from the volume of air inside the prism (about 3 centimetres) - to about 90 degrees centigrade by means of electric resistors like those used in domestic water heaters. These resistors are placed on the surface of the water along the plane of the prism, that is, the surface of the sea/water, and they follow the direction of the 20% inclined plane closing the furnace prism from above. The resistors are placed parallel to each other at intervals of about 0.25 / 0.30 meters and joined at the ends with an orthogonal rod. For the maximum length resistors, that is, the 10-meter ones, an iron float at the centre is envisaged for each of the same, which keeps them immersed in water a couple of centimetres below the surface. These resistances maintain the first centimetre of water below the surface at a temperature between 80 and 90 degrees centigrade. The task of the resistors is to increase the temperature of the seawater from about 28 degrees centigrade to the above-mentioned temperature. At this point, it is easy for the solar furnace, at a temperature of only about 150 degrees centigrade, to raise the temperature of the first layer of water from 90 to 105 degrees centigrade. The water vapour produced in such a short time will seek an escape route towards the cold air and it will then be channelled into the pipes that from a tank well below the sea level lead into the solar furnace prism to collect the water at the gaseous state by means of intake vents. In turn, the tank has another pipe that rises orthogonally out of the sea up to a hundred meters in height to seek cooler air that will help create intake currents for the gaseous water coming from the aforementioned vents placed in the solar furnace. Once the water vapour or water at the gaseous state enter the tank, the temperature of the same drops suddenly from about 110 degrees to about 25 degrees centigrade. This sudden drop in temperature transforms the water vapour inside the said tank to purified liquid water once again.

## Claims

1. A water purification system comprising a three-dimensional structure consisting of a plurality of plates interconnected so as to form walls so that said structure has at least an open space which coincides with its lower portion, wherein said structure is apt to be placed on the surface of the water in a lake or sea, so that the water surface where said structure is placed contributes to the hermetic sealing of the latter,
wherein the system comprises:
at least one source of heat, apt to be placed, in use, under the surface of the water, capable of heating the surrounding portion of water and of generating a corresponding amount of water vapour,
at least one conduit apt to connect said water vapour with a source of cold air so as to transform said water vapour into purified water;
at least one tank to store said purified water;
**characterised in that** the system comprises at least one element supporting said three-dimensional structure, wherein said supporting element is anchored to the bottom of said lake or sea, or is anchored to an adequate supporting surface placed at a given depth of said lake or sea,
**in that** said source of heat is constituted by at least one electrical resistor,
**in that** said heat source is associated with suitable energy supply, and
**in that** the three-dimensional structure consists of a right-angled triangular prism, having a first rectangular face (y1), which is the surface of the water on which said three-dimensional structure is apt to be placed, a second rectangular face (y2), orthogonal to the first rectangular face, a third rectangular face (y3) that joins far-ends of said first rectangular face (y1) and second rectangular face (y2), and two closed lateral faces in the shape of a right-angled triangle, wherein said first rectangular surface (y1) has a width from 6 to 10 meters and a minimum length of 10 meters and said plates are made of material selected from the group comprising plexiglass, glass, photovoltaic panels.

2. A water purification system according to claim 1, **characterised in that** said at least one source of heat is placed inside said three-dimensional structure.

3. A water purification system according to claim 1, **characterised in that** said suitable means of supply are selected from the group comprising a wind system, a photovoltaic panel system, an electric power plant fuelled by fossil fuel or hydrogen.

4. A water purification system according to any preceding claim, **characterised in that** at least one supporting element for said three-dimensional structure also supports said tank to store the purified water.

5. A water purification system according to one or more of the above claims, **characterised in that** it comprises said energy source inside said three- dimensional structure or connected thereto.

6. A water purification system according to one or more of the above claims, **characterised in that** at least one conduit comprises an intake pipe connected to said tank and to said cold air source.

7. A water purification system according to claim 6, **characterised in that** said intake pipe comprises at least one valve.

8. A water purification system according to one or more of the above claims, **characterised in that** said three-dimensional structure comprises further plates suitable to remain immersed below the surface of the water when said system is in operation, wherein said further plates form a continuation of said structure under the water surface.

9. A method for purifying water comprising the steps of:
- providing a three-dimensional structure consisting of a plurality of plates interconnected so as to form walls so that said structure has at least an open space which coincides with its lower portion, wherein the three-dimensional structure consists of a right-angled triangular prism, having a first rectangular face (y1), a second rectangular face (y2), orthogonal to the first rectangular face, a third rectangular face (y3) that joins far-ends of said first rectangular face (y1) and second rectangular face (y2), and two closed lateral faces in the shape of a right-angled triangle, wherein said first rectangular surface (y1) has a width from 6 to 10 meters and a minimum length of 10 meters and said plates are made of material selected from the group comprising plexiglass, glass, photovoltaic panels;
- placing the three-dimensional structure on the surface of the water to be purified in a lake or sea, so that the water surface where said structure is placed contributes to the hermetic sealing of the latter, said water surface being the first rectangular surface (y1) of said three-dimensional structure;
- supporting said three-dimensional structure by means of at least one supporting element, wherein said supporting element is anchored to the bottom of said lake or sea, or is anchored to an adequate supporting surface placed at a given depth of said lake or sea;
- providing at least one source of heat placed under the surface of the water to be purified, said source of heat being constituted by at least one electrical resistor and being associated with suitable energy supply;
- heating the portion of water surrounding said at least one source of heat and generating a corresponding amount of water vapour;
- connecting said water vapour, by means of a conduit, with a source of cold air so as to transform said water vapour into purified water;
- storing said purified water in a tank.

## Patentansprüche

1. Wasserreinigungssystem mit einem dreidimensionalen Aufbau, der aus mehreren Platten besteht, die so miteinander verbunden sind, dass sie Wände bilden, sodass der Aufbau wenigstens einen offenen Raum hat, der in seinem unteren Teil liegt, wobei der Aufbau dafür vorgesehen ist, auf der Wasseroberfläche eines Sees oder Meeres angeordnet zu werden, sodass die Wasseroberfläche, auf der der Aufbau angeordnet ist, dazu beträgt, diesen hermetisch abzudichten,
wobei das System aufweist:
wenigstens eine Wärmequelle, die dafür vorgesehen ist, im Betrieb unter der Wasseroberfläche angeordnet zu werden und dafür ausgelegt ist, den umgebenen Teil des Wassers zu erhitzen und eine entsprechende Menge Wasserdampf zu erzeugen,
wenigstens eine Leitung, die dafür ausgelegt ist, den Wasserdampf mit einer Quelle kalter Luft in Verbindung zu bringen, um den Wasserdampf in gereinigtes Wasser umzuwandeln,
wenigstens einen Tank, um gereinigtes Wasser zu speichern,
**dadurch gekennzeichnet, dass** das System wenigstens eine Komponente aufweist, welche den dreidimensionalen Aufbau stützt, wobei die stützende Komponente an dem Boden des Sees oder Meeres verankert ist oder an einer geeigneten Stützfläche verankert ist, die in einer gegebener Tiefe des Sees oder Meeres angeordnet ist,
dass die Wärmequelle von wenigstens einem elektrischen Widerstand gebildet ist,
dass der Wärmequelle eine geeigneten Energieversorgung zugeordnet ist, und
dass der dreidimensionaler Aufbau aus einem rechtwinkligen dreieckigen Prisma besteht, das eine erste rechteckige Seite (y1), welche die Wasseroberfläche ist, auf der der dreidimensionale Aufbau angeordnet werden soll, eine zweite rechteckige Seite (y2), die senkrecht zu der ersten rechteckigen Seite verläuft, eine dritte rechteckige Seite (y3), die abgewandte Enden der ersten rechteckigen Seite (y1) und der zweiten rechteckigen Seite (y2) verbindet, und zwei geschlossene Seitenflächen in Form eines rechtwinkligen Dreiecks aufweist, wobei der erste rechteckige Seiten (y1) eine Breite von 6 bis 10 Metern und eine Mindestlänge von 10 Metern hat und die Platten aus einer Material bestehen, das aus einer Gruppe ausgewählt ist, die Plexiglas, Glas und Fotovoltaik-Platten enthält.

2. Wasserreinigungssystem nach Anspruch 1, **dadurch gekennzeichnet, dass** die wenigstens eine Wärmequelle innerhalb des dreidimensionalen Aufbau angeordnet ist.

3. Wasserreinigungssystem nach Anspruch 1, **dadurch gekennzeichnet, dass** geeignete Versorgungsmittel aus einer Gruppe ausgewählt sind, die ein Windsystem, ein Fotovoltaik-Plattensystem, einen elektrischen Generator, der mit fossilem Brennstoff oder Wasserstoff betrieben wird, enthält.

4. Wasserreinigungssystem nach einem der vorstehenden Ansprüche, **dadurch gekennzeichnet, dass** die wenigstens eine Stützkomponente für den dreidimensionalen Aufbau auch den Tank zum Speichern des gereinigten Wassers stützt.

5. Wasserreinigungssystem nach einem oder mehreren der vorstehenden Ansprüche, **dadurch gekennzeichnet, dass** es die Energiequelle innerhalb des dreidimensionalen Aufbaus oder daran angeschlossen aufweist.

6. Wasserreinigungssystem nach einem oder mehreren der vorstehenden Ansprüche, **dadurch gekennzeichnet, dass** die wenigstens eine Leitung ein Einlassrohr aufweist, das an den Tank und an die Kaltluftquelle angeschlossen ist.

7. Wasserreinigungssystem nach Anspruch 6, **dadurch gekennzeichnet, dass** das Einlassrohr wenigstens ein Ventil aufweist.

8. Wasserreinigungssystem nach einem oder mehreren der vorstehenden Ansprüche, **dadurch gekennzeichnet, dass** der dreidimensionaler Aufbau zusätzliche Platten aufweist, die dafür ausgelegt sind, unterhalb der Wasseroberfläche eingetaucht zu bleiben, wenn das System in Betrieb ist, wobei die zusätzlichen Platten eine Fortsetzung des Aufbaus unter der Wasseroberfläche bilden.

9. Verfahren zum Reinigen von Wasser mit den folgenden Schritten:
- Bereitstellen eines dreidimensionalen Aufbaus, der aus mehreren Platten besteht, die so miteinander verbunden sind, dass sie Wände bilden, sodass der Aufbau wenigstens einen offenen Raum hat, der in seinem unteren Teil liegt, wobei der dreidimensionale Aufbau aus einem rechtwinkligen dreieckigen Prisma besteht, das eine erste rechteckige Seite (y1), eine zweite rechteckige Seite (y2), die senkrecht zur ersten rechteckigen Seite ist, eine dritte rechteckige Seite (y3), welche die abgewandten Enden der ersten rechteckigen Seite (y1) und der zweiten rechteckigen Seite (y2) miteinander verbindet, und zwei geschlossene Seitenflächen in Form eines rechtwinkligen Dreiecks hat, wobei die erste rechtwinklige Seite (y1) eine Breite von 6 bis 10 Metern und eine Mindestlänge von 10 Metern hat und die Platten aus einem Material sind, das aus einer Gruppe gewählt ist, die Plexiglas, Glas und Fotovoltaik-Platten enthält,
- Anordnen des dreidimensionalen Aufbaus auf der Oberfläche des zu reinigenden Wassers in einem See oder Meer, sodass die Wasseroberfläche, auf welcher der Aufbau angeordnet ist, zu seinem hermetischen Abdichten beträgt, wobei die Wasseroberfläche die erste rechteckige Seite (y1) des dreidimensionalen Aufbaues ist,
- Stützen des dreidimensionalen Aufbaues mittels wenigstens einer Stützkomponente, wobei die Stützkomponente an dem Boden des Sees oder Meers verankert ist oder an einer adäquaten Stützfläche verankert ist, die in einer gegeben Tiefe des Sees oder Meers angeordnet ist,
- Bereitstellen von wenigstens einer Wärmequelle unter der Oberfläche des zu reinigten Wassers, wobei die Wärmequelle von wenigstens einem elektrischen Widerstand gebildet ist und einer geeigneten Energiequelle zugeordnet ist,
- Aufheizen des Teils des Wassers, das die wenigstens eine Wärmequelle umgibt und erzeugen einer entsprechenden Menge Wasserdampf,
- den Wasserdampf mittels eines Durchlasses mit einer Quelle kalter Luft in Verbindung bringen, um so den Wasserdampf in gereinigtes Wasser umzuwandeln,
- Speichern des gereinigten Wassers in einem Tank.

## Revendications

1. Système de purification d'eau comprenant une structure tridimensionnelle consistant en une pluralité de plaques reliées entre elles de façon à former des parois de sorte que ladite structure ait au moins un espace ouvert qui coïncide avec sa portion inférieure, dans lequel ladite structure est apte à être placée sur la surface de l'eau dans un lac ou la mer, de sorte que la surface d'eau où ladite structure est placée contribue à l'étanchéité hermétique de cette dernière,
le système comprenant :
au moins une source de chaleur, apte à être placée, en utilisation, sous la surface de l'eau, capable de chauffer la portion environnante d'eau et de générer une quantité correspondante de vapeur d'eau,
au moins un conduit apte à raccorder ladite vapeur d'eau avec une source d'air froid de façon à transformer ladite vapeur d'eau en eau purifiée ;
au moins un réservoir pour stocker ladite eau purifiée ;
**caractérisé en ce que** le système comprend au moins un élément supportant ladite structure tridimensionnelle, dans lequel ledit élément de support est ancré au fond dudit lac ou de ladite mer, ou est ancré à une surface de support adéquate placée à une profondeur donnée dudit lac ou de ladite mer,
**en ce que** ladite source de chaleur est constituée d'au moins une résistance électrique,
**en ce que** ladite source de chaleur est associée à une alimentation en énergie appropriée, et
**en ce que** la structure tridimensionnelle consiste en un prisme triangulaire rectangle, ayant une première face rectangulaire (y1), qui est la surface de l'eau sur laquelle ladite structure tridimensionnelle est apte à être placée, une deuxième face rectangulaire (y2), orthogonale à la première face rectangulaire, une troisième face rectangulaire (y3) qui joint des extrémités éloignées de ladite première face rectangulaire (y1) et de ladite deuxième face rectangulaire (y2), et deux faces latérales fermées en forme d'un triangle rectangle, dans lequel ladite première surface rectangulaire (y1) a une largeur de 6 à 10 mètres et une longueur minimale de 10 mètres et lesdites plaques sont réalisées en un matériau choisi dans le groupe comprenant du plexiglas, du verre, des panneaux photovoltaïques.

2. Système de purification d'eau selon la revendication 1, **caractérisé en ce que** ladite au moins une source de chaleur est placée à l'intérieur de ladite structure tridimensionnelle.

3. Système de purification d'eau selon la revendication 1, **caractérisé en ce que** lesdits moyens d'alimentation appropriés sont choisis dans le groupe comprenant un système éolien, un système de panneaux photovoltaïques, et une centrale électrique ravitaillée en combustible fossile ou en hydrogène.

4. Système de purification d'eau selon l'une quelconque des revendications précédentes, **caractérisé en ce qu'**au moins un élément de support pour ladite structure tridimensionnelle supporte également ledit réservoir pour stocker l'eau purifiée.

5. Système de purification d'eau selon une ou plusieurs des revendications ci-dessus, **caractérisé en ce qu'**il comprend ladite source d'énergie à l'intérieur de ladite structure tridimensionnelle ou raccordée à celle-ci.

6. Système de purification d'eau selon une ou plusieurs des revendications ci-dessus, **caractérisé en ce qu'**au moins un conduit comprend un tuyau d'amenée raccordé audit réservoir et à ladite source d'air froid.

7. Système de purification d'eau selon la revendication 6, **caractérisé en ce que** ledit tuyau d'amenée comprend au moins une vanne.

8. Système de purification d'eau selon une ou plusieurs des revendications ci-dessus, **caractérisé en ce que** ladite structure tridimensionnelle comprend des plaques supplémentaires appropriées pour rester immergées en dessous de la surface de l'eau lorsque ledit système est en fonctionnement, dans lequel lesdites plaques supplémentaires forment une continuité de ladite structure sous la surface d'eau.

9. Procédé de purification d'eau comprenant les étapes de :
- fourniture d'une structure tridimensionnelle consistant en une pluralité de plaques reliées entre elles de façon à former des parois de sorte que ladite structure ait au moins un espace ouvert qui coïncide avec sa portion inférieure, dans lequel la structure tridimensionnelle consiste en un prisme triangulaire rectangle, ayant une première face rectangulaire (y1), une deuxième face rectangulaire (y2), orthogonale à la première face rectangulaire, une troisième face rectangulaire (y3) qui joint des extrémités éloignées de ladite première face rectangulaire (y1) et de ladite deuxième face rectangulaire (y2), et deux faces latérales fermées en forme d'un triangle rectangle, dans lequel ladite première surface rectangulaire (y1) a une largeur de 6 à 10 mètres et une longueur minimale de 10 mètres et lesdites plaques sont réalisées en un matériau choisi dans le groupe comprenant du plexiglas, du verre, des panneaux photovoltaïques ;
- mise en place de la structure tridimensionnelle sur la surface de l'eau à purifier dans un lac ou la mer, de sorte que la surface d'eau où ladite structure est placée contribue à l'étanchéité hermétique de cette dernière ; ladite surface d'eau étant la première surface rectangulaire (y1) de ladite structure tridimensionnelle ;
- support de ladite structure tridimensionnelle au moyen d'au moins un élément de support, dans lequel ledit élément de support est ancré au fond dudit lac ou de ladite mer, ou est ancré à une surface de support adéquate placée à une profondeur donnée dudit lac ou de ladite mer ;
- fourniture d'au moins une source de chaleur placée sous la surface de l'eau à purifier, ladite source de chaleur étant constituée d'au moins une résistance électrique et étant associée à une alimentation en énergie appropriée ;
- chauffage de la portion d'eau environnante de ladite au moins une source de chaleur et génération d'une quantité correspondante de vapeur d'eau ;
- raccordement de ladite vapeur d'eau, au moyen d'un conduit, à une source d'air froid de façon à transformer ladite vapeur d'eau en eau purifiée ;
- stockage de ladite eau purifiée dans un réservoir.
